(19)

**Europäisches Patentamt**
**European Patent Office**
**Office européen des brevets**

(11) **EP 1 646 255 B1**

(12) **EUROPEAN PATENT SPECIFICATION**

(45) Date of publication and mention
of the grant of the patent:
**27.08.2008 Bulletin 2008/35**

(51) Int Cl.:
*H04Q 7/34* ^(2006.01)   *H04M 15/00* ^(2006.01)
*H04L 12/24* ^(2006.01)

(21) Application number: **04742030.2**

(86) International application number:
**PCT/ES2004/000301**

(22) Date of filing: **25.06.2004**

(87) International publication number:
**WO 2004/114702 (29.12.2004 Gazette 2004/53)**

(54) **METHOD, SYSTEM AND PROGRAM PRODUCT FOR OBTAINING AT LEAST ONE VALUE RELATING TO THE AVAILABILITY OF A SEGMENT OF A TELECOMMUNICATIONS NETWORK**

VERFAHREN, SYSTEM UND PROGRAMMPRODUKT ZUM ERHALTEN MINDESTENS EINES WERTS IN BEZUG AUF DIE VERFÜGBARKEIT EINES SEGMENTS EINES TELEKOMMUNIKATIONSNETZES

PROCEDE, SYSTEME ET PRODUIT PROGRAMME DESTINES A OBTENIR AU MOINS UNE VALEUR RELATIVE A LA DISPONIBILITE D'UN SEGMENT DE RESEAU DE TELECOMMUNICATIONS

(84) Designated Contracting States:
**AT BE BG CH CY CZ DE DK EE ES FI FR GB GR HU IE IT LI LU MC NL PL PT RO SE SI SK TR**

(30) Priority: **26.06.2003 ES 200301498**

(43) Date of publication of application:
**12.04.2006 Bulletin 2006/15**

(73) Proprietor: **Vodafone Group PLC**
**Newbury**
**Berkshire RG14 2FN (GB)**

(72) Inventor: **YANES MONTIEL, José Manuel**
**E-28029 Madrid (ES)**

(74) Representative: **Carvajal y Urquijo, Isabel et al**
**Clarke, Modet & Co.**
**C/Goya 11**
**28001 Madrid (ES)**

(56) References cited:
**US-A- 5 930 333**          **US-A- 6 003 090**

**Description**

FIELD OF THE INVENTION

The invention is encompassed within the field of telecommunications and, specifically, within the field of telecommunications networks, for example cellular mobile telephony networks. As is known, English acronyms and terms are normally used in said field to refer to elements and concepts pertaining thereto. The English acronyms and terms used in this text will be explained throughout the same.

BACKGROUND OF THE INVENTION

In order to consider that a telecommunications network (for example, a GSM - Global System for Mobile Communication- or UMTS -Universal Mobile Telecommunications System also called "Third Generation Mobile Telephony"- cellular mobile telephony network) works properly, the network must comply with certain requirements relating to its functionality and to its quality. The "functionality" concept usually refers to the fact that the network must support certain types of services and be adapted to certain standards. The "quality" concept usually covers several aspects, one of which is the "availability" of the network.
In telecommunications networks, for the operation of the network (and for being able to check the quality), several types of variables are usually measured, among them the element status alarms (generated by the elements integrating the network) and the amount of traffic the network carries (which is measured with specific counters). During the development of a telecommunications network, traffic counters are many times not yet available given that counters are frequently implemented once the network is almost finished. On the other hand, there is very little traffic in the network during the development of the network, generally only some traffic generated in relation to the tests which are carried out.
However, the alarms can be of use for obtaining data relating to the availability of the network, also during the development of the network. Specifically, many of the elements integrating a telecommunications network are configured such that they generate an element status alarm when the element in question goes to a "non-operational" status, i.e., when it stops working. These alarms are sent to an entity responsible for storing data relating to the alarms (or in complex networks, to one of several entities provided for this purpose). The alarm data is usually stored in a database in which for each element status alarm which is generated in the network, a start time of the alarm (indicating the moment- year, month, day, hour, minute, second-in which the status of the element changed from the operational status to the non-operational status), an end time of the alarm (indicating the moment- year, month, day, hour, minute, second- in which the status of the element changed from the non-operational status to the operational status) and an identifier of the element (so that it is possible to check which are the elements that have generated the problems), as well as other data identifying the type of problem, possible cause of the failure, etc., are stored. (For greater clarity and so that the description is easier to read, the data of the year, month and day will be omitted in the alarm start times and end times set forth below in this text, and only the data of the hour, minute and, occasionally, second, will be indicated).
A known way of checking the availability of the network is to check, with a given frequency, the current situation of given elements (i.e. if given elements are in an operational status or not), and according to the detected situation, calculate a current availability value.
However, this way of proceeding entails certain problems when it is applied to a telecommunications network: given that the current values of the statuses of the elements are checked (something which can be done by consulting the alarms) in a given moment, and given that these checks are not done continuously (performing the checks continuously would entail excessive calculations and possibly excessive traffic related to the obtainment and management of the data), but rather punctually, for example every five minutes, it is likely that many alarms are not detected: for example, suppose that a check of the statuses of the elements is performed at 12:05:00 and another one at 12:10:00. Suppose that a node or element, for example a BTS (Base Transceiver Station) in a GSM network or a Node B (Node Bs in UMTS networks basically correspond to the BTS- Base Transceiver Station- of GSM networks, i.e., they correspond to the antennas distributed throughout the area in which mobile telephony coverage is desired to be had) in a UMTS network stops working at 12:06:00 and works again three minutes later at 12:09:00. Then the element alarm status indicative of the non-operational status of this element (BTS/Node B) has an alarm start time of 12:06:00 (the moment in which the element stopped working/being operational) and an alarm end time of 12:09:00 (the moment in which the element in question became operational again). This alarm, with its start time and its end time and with an identifier of the affected element, is stored in a database of the network. Given that the element has been "non-operational" for 3 minutes during the 12:05:00-12:10:00 interval, it can be said that the element had an availability of (5-3)/5 = 0.4 (or 40%) during this time interval.
However, if the method discussed above, i.e. the conventional method based on checking the current status of the alarms at several given moments, is applied, and if these moments are 12:05:00 and 12:10:00, the "active" alarm of 12:06:00 and 12:09:00 is not detected since this alarm begins after the check carried out at 12:05:00 and finishes before the check which is carried out at 12:10:00. Due to this circumstance, the conventional method would give a 100% availability value for this element in question (whereas the real value in the interval was 40%). This problem is accentuated if the data capturing frequency is reduced (for example, if it goes from 5 minute intervals to 30 minute intervals, etc.). The risk of error could obviously be reduced by increasing the frequency, for example, by capturing the element status data every 10 seconds or less. However, this would entail a substantial increase in the number of calculations to be carried out and possibly in the data traffic, which would represent an additional load on the equipment involved.

This problem is accentuated if, rather than analyzing the "availability" of isolated elements, the availability of a segment of a network (which can correspond to part of a network or an entire network) made up of a plurality of elements which have to interact so that the segment works properly, are to be analyzed, such that the availability of the segment depends on the availability of each one of the elements, the availability of some elements being able to have more influence than the availability of others in the "overall" availability of the segment.

For example, a prior-art segment of a UMTS network-; comprises five Nodes B1-B5, an RNC (Radio Network Controller) , an lu Interface 7 (this element acts as an interface between the core network and the UTRAN -UMTS Radio Access Network-) between the RNC and a WG (WG = Wireless Gateway, which element acts as a gateway for data and signals between the RNC and a conventional GSM network 9). To evaluate the "overall availability" of the segment, the availability of each one of the elements must be assessed in each moment, since they interact (for example, if the RNC is non-operational, a subscriber cannot access the GSM network 9 through Node B 1, no matter how much the lu Interface 7, WG 8 and Nodes B1-B5 work. With the system described in the foregoing, and if the intention is to obtain data from alarms with a large frequency (to prevent excessive alarms from being undetected due to their beginning and ending in the interval between two data captures), a large number of calculations and of data captures related to the process occurs, which entails an important load on the equipment. However, if one refrains from obtaining data frequently, it is likely that the calculation of the availability does not reflect the real values, since many alarms are not detected or are not taken into account according to their real duration (in the known system discussed, this real duration is not measured, rather it is checked whether an element is operational or not in the moments in which the data captures are carried out).

Therefore, there has been detected a need to provide a system allowing a subscriber or operator to be able to obtain values relating to the availability of an element or segment of a telecommunications network in a reliable manner and without having to perform excessive calculations or to generate excessive data traffic, such that an excessive load on the equipment involved is prevented. Furthermore, it is desirable that the system allows the operator to be able to define how the availability of the segment should be calculated according to the statuses of the elements constituting the segments (or the element status alarms corresponding to said elements).

US-6003090-A discloses a system for determining the network connection availability between source and destination devices for a specified time period; the system, based on a topological analysis of the network, determines the availability of segments of the network, giving a relative weight to the network elements and to corresponding segments.

US-5930333-A discloses a method and system for projecting service availability in a telecommunications system. The system calculates, upon request, an available value in a telecommunications network for a network segment as a function of operational/non-operational status values based on historical data stored in a database.

DESCRIPTION OF THE INVENTION

A first aspect of the invention refers to.a method for obtaining at least one value relating to the availability of a segment of a telecommunications network, which network includes a plurality of elements, each one of which, when in a non-operational status, generates an element non-operational status alarm A, the network comprising at least one database in which the alarms A generated by the elements of the network are stored with an indication of a start time AST and of an end time AET of each alarm, corresponding to the start and end, respectively, of a non-operational status period of the element that generated the alarm, and with an identification of said element. The method comprises the steps of:

- defining a segment S by selecting $n$ elements of the elements forming part of the network, $n \geq 1$;
- defining at least one segment status indicator SSI, defining its value VSSI in each moment as a function F of the value at the same moment of at least one alarm A corresponding to the selected elements (it can be considered that the alarm has the value "1" if it exists and "0" if it does not exist in the moment in question);
- defining an analysis period P (for example a 24 hour period, from 00:00 until 24:00 on a given date);
- dividing said period P into m intervals I, $m \geq 1$ (the intervals can all have the same length, for example 15 minutes, or can have a different length);
- obtaining a list of the alarms A corresponding to the selected elements and to the defined period P, said list including for each alarm A the start time AST and the end time AET of the alarm and an identification of the element that generated the alarm (the list can be obtained, for example, from the network database);

- calculating, from the list of alarms and throughout each interval I, the value VSSI of the segment status indicator SSI as a function F of the alarms A corresponding to each moment, according to the list of alarms A;
- obtaining a segment availability value SAV from the calculated value VSSI of the segment status indicator SSI (the segment availability value SAV can be identical to the calculated value VSSI of the segment status indicator SSI, or a function of said value VSSI.

Thus, and starting from the list of alarms, the operator can easily obtain values concerning the availability of segments of the network according to criteria established by the operator during its definition of the function F, of the intervals I and of the period P. These values reflect the "real" availability of the chosen segment since they take into account the development of the status of the elements (the start and finish thereof throughout each interval) "continuously" throughout the period, and not only in given moments of the period.

The "segment" can obviously correspond to part of the network, but it can also comprise an entire telecommunications network, depending on whether or not the relevant elements of the network are selected.

The intervals I of the period P can all have the same duration, for example 15 minutes. For these cases, for at least one interval I, the segment availability value (SAV) during said interval is obtained with the following procedure:

dividing the interval I into subintervals I' corresponding to each interval between a start time AST or an end time AET of an alarm generated by an element of the segment and the following start time AST or end time AET of an alarm generated by an element of the segment (the value (VSSI) of the segment status indicator is thus maintained constant throughout each subinterval I');

calculating the value VSSI of the segment status indicator SSI for each subinterval I'; and

calculating the segment availability value SAV for the interval I as the sum of the duration DI' of each subinterval multiplied by the value VSSI of the segment status indicator SSI for each subinterval (I'), divided by the duration DI of the interval I (i.e. the segment availability value SAV would be the value VSSI of the segment status indicator integrated over the interval).

Alternatively, the division of the period P into intervals I can be done such that the separation between successive intervals corresponds to the moments of the start times AST and end times AET of the alarms of the list, such that the value VSSI of the segment status indicator SSI is constant throughout each interval I.

It is possible that $n = 1$, whereby the segment would comprise a single element, the value (VSSI) of the segment status indicator in each moment being a direct function of whether an alarm A corresponding to said element and to said moment exists in the list.

However, if $n \geq 2$, the segment comprises at least two elements, the value VSSI of the segment status indicator in each moment being a direct function of whether one or more alarms A corresponding to said elements and to said moment exist in the list.

The value VSSI of the segment status indicator in each moment can be defined as a weighted function F of the value in the same moment of alarms A corresponding to a plurality of elements of the segment, the weight being established according to an estimated relevance of an element for the availability of the segment. That is, the operator can decide that an alarm corresponding to a first element (for example, a Node B in a cellular mobile telephony system) must contribute less to the value VSSI of the segment status indicator than an alarm corresponding to a second element (for example, an RNC) if the operator considers that the loss of the second element RNC has more serious effects for the availability of the segment than the loss of the first element (Node B).

If $m \geq 2$, segment availability values SAV can be obtained for the period for a plurality of intervals.

The method can be applied to a cellular mobile telephony network but also to other telecommunications networks.

A second aspect of the invention refers to a system for obtaining at least one value relating to the availability of a segment of a telecommunications network, which network includes a plurality of elements each one of which, when it is in a non-operational status, generates a non-operational status alarm A of the element, the network comprising at least one database in which the alarms A generated by the elements of the network are stored with an indication of a start time AST and an end time AET of each alarm, corresponding to the start and end, respectively, of a non-operational status period of the element that generated the alarm, and with an identification of said element.

According to the invention, the system comprises:

- means for defining a segment S by selecting $n$ elements of the elements forming part of the network, $n \geq 1$;
- means for defining at least one segment status indicator SSI, defining its value VSSI in each moment as a function F of the value in the same moment of at least one alarm A corresponding to the selected elements (it can be considered that the alarm has the value "1" if it exists and "0" if it does not exist in the moment in question);

- means for defining an analysis period P;
- means for dividing said period P into m intervals I, $m \geq 1$.

These means (for defining segment, indicator, period and intervals) can be associated to a PC or work station in which the subscriber can, through an interactive subscriber interface, define the segments, the function F determining the value VSSI of the segment status indicator, the period and its division into intervals according to the practical characteristics of each case.

The system further comprises:

- means for obtaining a list of the alarms A corresponding to the selected elements and to the defined period P, said list including for each alarm A the start time AST and the end time AET of the alarm and an identification of the element that generated the alarm (the list can be obtained from an alarm database of the network; the alarms the start time AST and end time AET of which are within the chosen period are chosen);
- means for calculating, from the list of alarms and throughout each interval I, the value VSSI of the segment status indicator SSI as a function F of the alarms A corresponding to each moment, according to the list of alarms A;
- means for obtaining a segment availability value SAV from the calculated value VSSI of the segment status indicator SSI (directly taking said value of the segment status indicator as a segment availability value); and
- means for displaying said segment availability value in a subscriber interface (for example, in a PC or work station, for example in the same PC or work station in which the subscriber defined the segment and the period, etc.).

The means for defining at least one segment status indicator SSI and, specifically, its value VSSI in each moment as a function F of the value in the same moment of at least one corresponding alarm A can comprise tables and/or diagrams with the architecture of the segment, tables with a list of the elements that can generate alarms, and a weight assigned to each element and/or type of element according to its estimated relevance for the availability of the segment. The weight can be pre-assigned by the system (by default) or it can be assigned in each case by the subscriber. For example, the system can be designed to automatically assign a weight to given elements according to their estimated or predefined relevance for the availability of a segment, for example by taking into account if there is redundancy, etc. For example, it can be defined for a segment that the weight assigned to a Node B must be equal to "1/(total number of Node Bs of the segment)", etc.

The intervals I of the period P can all have the same duration DI, in which case the means for calculating the value VSSI of the segment status indicator SSI and the means for obtaining a segment availability value SAV from the value VSSI can be configured such that for at least one interval I, the segment availability value SAV during said interval can be obtained by:

dividing the interval into subintervals I' corresponding to each interval between a start time AST or an end time AET of an alarm generated by an element of the segment and the following start time AST or end time AET of an alarm generated by an element of the segment;
calculating the value VSSI of the segment status indicator SSI for each subinterval I'; and
calculating the segment availability value SAV for the interval I as the sum of the duration DI' of each subinterval multiplied by the value VSSI of the segment status indicator SSI for each subinterval I', divided by the duration DI of the interval I.

Alternatively, the system can be configured such that the division of the period P into intervals I is done such that the separation between successive intervals corresponds to the moments of the start time AST and end times AET of the alarms of the list, such that the value VSSI of the segment status indicator SSI is constant throughout each interval I.

It is possible to choose $n$ such that $n = 1$, in which case the segment comprises a single element, the value VSSI of the segment status indicator in each moment being a direct function of whether an alarm A corresponding to said element and to said moment exists in the list.

If $n \geq 2$, the segment comprises at least two elements, the value VSSI of the segment status indicator being in each moment a function of whether one or more alarms A corresponding to said elements and to said moment exists in the list.

The means for defining at least one segment status indicator SSI with a value VSSI are configured such that the value VSSI of the segment status indicator in each moment can be defined as a weighted function F of the value in the same moment of alarms A corresponding to a plurality of elements of the segment so that an operator can establish the weight according to an estimated relevance of an element for the availability of the segment.

If $m \geq 2$, each period is divided into at least two intervals.

The telecommunications network can be a cellular mobile telephony network, for example a UMTS network.

The means for obtaining a list of the alarms A can be configured to obtain said list from at least one database of the telecommunications network and to store the list in an internal or own database of the telecommunications network in order to reduce the need to access the database of the telecommunications network when values VSSI of the segment status indicator are calculated.

A third aspect of the invention refers to a program product comprising program instruction means for carrying out the method described above when the program is run in a computer associated to a telecommunications network. The product can be stored in a program medium, for example in the internal memory of a computer, in a database of a telecommunications network, in a CD-ROM, in a diskette, etc.

DESCRIPTION OF A PREFERRED EMBODIMENT OF THE INVENTION

It is now explained how the invention is applied to a UMTS network according to that which has been described in the background of the invention, further including a database in which a record of alarms generated by the different elements of the network are stored, and which are stored in the database by means of a subsystem of recompiling information regarding alarms.

Considering the UMTS mobile telephony network, the choice can be made to analyze the availability of one or several isolated elements (for example the RNC), or of a "segment" of the network, for example a segment comprising the elements necessary for the subscribers in a given area (attended by Nodes B1-B5) to access the GSM network. In such case, a segment can be integrated by Nodes B1-B5, the RNC, , the lu Interface and the WG.

In the case of a segment constituted of these elements B1-B5, RNC, in interface and WG, an operator (for example an employee of a mobile telephony operating company or a telephony network development company) can consider that a suitable definition of "availability" of the segment integrated by said elements should reflect the degree of "capacity" of this segment so as to allow a subscriber to access the GSM network through a Node B. Then, the following is observed:

- For this segment to be considered "available", it is indispensable that the RNC , the lu Interface and the WG work; if any of these elements is non-operational, a subscriber cannot access the GSM network 9 through the Node B8. As a result, an active element status alarm for any of these elements (which alarm indicates that the element is in the non-operational status) implies that the segment is not available.

- On the other hand, at first it is not necessary for all the Nodes B1-B5 to be working, since if one of them is in the non-operational status, the segment continues to be available for subscribers accessing through the other four Nodes B. As a result, the operator can consider that the loss of one Node B implies a reduction of 1/5 (i.e. 20%) of the overall availability of the segment. If two Nodes B are in the non-operational status, the availability drops by 40%, etc.

That is, the operator can establish a "Segment Status Indicator" SSI, the value of which in each moment depends on the status (operational/non-operational) of the different elements, i.e. it is a function of the status of said elements (which can be measured through the corresponding element status alarms). In the case disclosed hereinbefore, the operator can define the function in the following manner:

The segment status indicator SSI is a function of the status of elements B1-B5, RNC, in Interface and WG, the value VSSI of which is as follows:

a) when there is an element status alarm for any of the elements RNC , lu Interface or WG , the segment status indicator has value 0 (indicative of a "non-operational" status or "availability 0" of the segment)

b) if there is no element status alarm corresponding to the elements RNC , lu Interface or WG, the segment status indicator has the following value: 1-0.2 x number of Nodes B1-B5 for which there is an element status alarm. That is, the segment status indicator has a value of:

"1" if all the Node Bs are working,
"0.8" if there is an alarm relating to one of the Node Bs,
"0.6" if there are alarms relating to two of the Node Bs,
"0.4" if there are alarms relating to three of the Node Bs,
"0.2" if there are alarms relating to four of the Node Bs,
"0" if there are alarms relating to five of the Node Bs.

Once this definition of the indicator is established, the operator defines an analysis period P for which segment availability values SAV are sought to be obtained. It can further divide said period P into m intervals I; m can be 1, in which case a single value is obtained for the period, but it is usually more desirable to divide the period into several intervals with a given duration DI, since it can thus be seen how the availability varies throughout, for example, one day.

By means of a subsystem of obtaining a list of alarms, the operator obtains and stores in its own database 50 a list of the alarms A corresponding to the selected elements and corresponding to the chosen period P. For each alarm A, the list includes the start time AST and the end time AET of the alarm and an identification of the element that generated the alarm. Given that the operator now has the information relating to the alarms in its own database, it does not have to access the database of the network every time it wishes to analyze the alarm data, which prevents the operations on the lists from implying an additional load on the network.

Now the operator can view, by means of a viewing subsystem, the list of alarms (with their start times, end times, and identifier of the element that generated the alarm). The operator can also, by means of an availability calculation subsystem, calculate the availability of the segment during each interval I of the period. Basically, what the availability calculation subsystem can do is, from the list of alarms and throughout each interval I, calculate the value VSSI of the segment status indicator SSI as a function F of the alarms A corresponding to each moment, according to the list of the alarms A, and obtain a segment availability value SAV from the calculated value VSSI of the segment status indicator SSI.

To facilitate comprehension of the invention, a practical case based on hypothetical alarms generated by some elements of the segment described hereinbefore will be described. It is supposed that the operator has chosen a period of 00:00-24:00 of a given day and has chosen to divide it into 96 intervals, each one with a 15 minute duration.

In a first step, it obtains from the database a list including all the alarms which have been active during this interval. Table 1 reflects said alarms (5 in all):

Table 1

| AST (alarm start time) | AET (alarm end time) | Identifier of the element | Comments |
| --- | --- | --- | --- |
| 08:00 | 09:00 | 1 | loss of Node B-1 for one hour |
| 08:35 | 10:00 | 2 | loss of Node B-2 for one hour and 25 minutes |
| 08:37 | 10:55 | 7 | loss of Iu Interface seen from WG for two hours and 18 minutes |
| 08:40 | 11:00 | 7 | loss of Iu Interface seen from RNC for two hours and 20 minutes |
| 10:45 | 11:15 | 8 | Loss of WG for half an hour |

By applying function F discussed above, the system can now calculate the availability for each 15 minute period from 00:00 to 24:00. This calculation could be carried out by calculating, throughout each interval, the value VSSI of the segment status indicator and then taking the weighted mean of said value throughout each interval in the following manner, using the 08:30-08:45 interval as an example:

First, it is observed that there is a series of "occurrences" throughout the interval; said occurrences can be used as the basis for dividing the interval into a series of "subintervals" I':

a) First subinterval I':

- duration: from the start of the interval (I) at 08:30 until 08:35 (AST for the alarm relating to the loss of Node B 2) = 5 minutes.
- alarms active during this subinterval: only one alarm, corresponding to the loss of Node B 1.
- value VSSI of the segment status indicator: 1-0.2 x 1 = 0.8

b) second subinterval I':

- duration: from 08:35 until 08:37 (AST for the alarm relating to the loss of the Iu Interface seen from the WG) = 2 minutes.
- alarms active during this subinterval: two alarms, namely, the one corresponding to the loss of Node B 1 and the one corresponding to the loss of Node B 2.
- value (VSSI) of the segment status indicator: 1-0.2 x 2 = 0.6

c) third subinterval I':

- duration: from 08:37 until 08:40 (AST for the alarm relating to the loss of the Iu Interface seen from the RNC) = 3 minutes.
- alarms active during this subinterval: three alarms, namely, the one corresponding to the loss of Node B 1 and the one corresponding to the loss of Node B 2 and the one corresponding to the loss of the Iu Interface seen from WG.
- value VSSI of the segment status indicator: 0 (since the Iu Interface is lost)

d) fourth subinterval I':

- duration: from 08:40 until 08:45 (end of interval I) = 5 minutes.
- alarms active during this subinterval: four alarms, namely, the one corresponding to the loss of Node B 1 and the one corresponding to the loss of Node B 2, the one corresponding to the loss of the Iu Interface seen from the WG and the one corresponding to the loss of the Iu Interface seen from the RNC.
- value VSSI of the segment status indicator: 0 (since the Iu Interface is lost).

The following formula can be applied to calculate the segment availability value SAV:

SAV = sum of the duration DI' of each subinterval multiplied by the value VSSI of the segment status indicator SSI for each subinterval I', divided by the duration DI of the interval I.

That is, in the case described above, the SAV would be:

$$SAV = (5 \times 0.8 + 2 \times 0.6 + 3 \times 0 + 3 \times 0)/15 \approx 0.35.$$

As an alternative, rather than dividing the period into intervals of an equal length, the intervals can be defined according to the alarm start times and alarm end times, such that each interval has a constant value VSSI of the segment status indicator throughout the interval. Then, the segment availability value SAV for the interval would be equivalent to the VSSI. In the example discussed above, the time corresponding to 08:30-08:45 would be divided into four intervals:

08:30-08:35: segment availability value SAV = 0.8 (80%)
08:35-08:37: segment availability value SAV = 0.6 (60%)
08:37-08:40: segment availability value SAV = 0 (0%)
08:40-08:45: segment availability value SAV = 0 (0%)

The operator can choose either manner of dividing the intervals/subintervals according to the requirements of each case.

These two approaches will be discussed hereinbelow. First, the time of 15 minutes as the duration of each interval (I) has been chosen, whereby if the period (P) lasts from 00:00-00:24, one interval (I) corresponds to the 08:30-08:45 period. To calculate the segment availability value (SAV) in this interval, it can first be divided into subintervals (I') corresponding to the periods between successive alarm start times (AST) and end times (AET), and then proceed according to that indicated in the first example set forth above. In the second example, the intervals are not of a duration pre-established by the operator, but rather each interval I corresponds to the time lapsing between successive alarm start times AST and end times AET on the list.

The operator can choose the manner of establishing intervals according to what it prefers in each case, taking into account the purpose of the information, for example taking into account if it is of more interest to see the development of the availability value of the segment in each moment, or if it is of more interest to see how the mean value is developed throughout, for example, a day, a week or a month.

Obviously it is fundamental to establish the function F determining the value VSSI of the segment status indicator SSI by taking into account how the elements of the segment interact, for example if "they are in series" or "in parallel". It can further occur that the same element gives rise to a plurality of alarms, which have to be taken into account together to determine the availability of the element. For example, if the foregoing example set forth is considered, Iu Interface can generate, when it goes to a non-operational status, an alarm "seen" from the WG , and another one "seen" from the RNC. This is one example of how there can be two different alarms which, nevertheless, refer to the same event (in the example given, the loss of the Iu Interface ); this event therefore generates an alarm coming from the RNC and another alarm coming from the WG. Ideally, the start times and end times of both alarms should be identical, but in practice, due to the implementation of the alarms, it is possible for them to occur during different intervals (even though two alarms refer to the same element, it is possible for one to be generated after a series of checks and the other one after different checks, which can give rise to different start times of the alarm). As a result, to facilitate the creation or definition of the function F defining the value VSSI of the segment status indicator SSI in each moment, a "composite alarm" can be created for the element, constituted of the other two alarms (those corresponding to the loss of the element "seen" from one side and the other one, respectively).

On the other hand, a situation can be contemplated in which the alarm corresponding to a loss of, for example, the WG due to redundancy does not have a "weight" of 100% (as in the example given above, but rather, for example, 50%. Likewise, the alarm due to the loss of the RNC could have a weight of 25% (also due to redundancy). In such case, the following hypothetical situation could be considered:

> 09:00-11:00 Loss of the RNC ("weight": 25%)
> 10:00-11:30 Loss of the WG ("weight": 50%)

For a service or segment represented by the elements RNC and WG, and as they are two elements in series, the VSSI of the section or segment made up of these elements could be defined as "the lesser value" of the "availability" of each element, which would give us the following VSSI for the indicated interval:

> 09:00-10:00 VSSI = 0.75 (due to the loss of the RNC, representing 25%)
> 10:00-11:00 VSSI = 0.5 (the loss of the WG represents a 50% reduction in the "availability"; as these are two elements "in series", only the element which most reduces the availability is considered, i.e. in this case, the WG).
> 11:00-11:30 VSSI = 0.5 (the RNC is operational, but the WG continues to be non-operational and, given that it has a "weight" of 50% (greater than that of the RNC), the VSSI does not change but rather it continues to be 0.5).

That is, in summary, as it is a segment made up of elements in series, the overall availability is the lesser of the availabilities of the elements constituting the segment.

Logically, when they are elements "in parallel", as is the case with the Node Bs in the example given above, the availabilities are added together.

A system according to a preferred embodiment of the invention comprises:

- means for defining a segment S by selecting $n$ elements of the elements forming part of the network, $n \geq 1$;
- means for defining at least one segment status indicator SSI, defining its value (VSSI) in each moment as a function F of the value in the same moment of at least one alarm A corresponding to the selected elements;
- means for defining an analysis period P for which at least one segment availability value SAV is desired to be obtained;
- means for dividing said period P into $m$ intervals I, $m \geq 1$.

These means can be associated to a PC or work station in which the subscriber can, through an interactive subscriber interface, define the segments, the function F determining the value VSSI of the segment status indicator, the period and its division into intervals according to the practical characteristics of each case.

The system further comprises:

- means for obtaining a list of the alarms A corresponding to the selected elements and to the defined period P, said list including for each alarm A the start time AST and the end time AET of the alarm and an identification of the element that generated the alarm (this list can be obtained from an alarm database of the network; alarms the start time AST and/or end time AET of which are within the chosen period are chosen);
- means for calculating (using the availability calculation subsystem described before), from the list of alarms and throughout each interval I, the value VSSI of the segment status indicator SSI as a function F of the alarms A corresponding to each moment, according to the list of alarms A;
- means for obtaining (using the availability calculation subsystem described before) a segment availability value SAV from the calculated value VSSI of the segment status indicator SSI; and
- means for displaying said segment availability value in a subscriber interface (for example, in a PC or work station in which the subscriber defined the segment and the period, etc.).

The means for obtaining a list of the alarms A can be configured to obtain said list from at least one database of the telecommunications network and to store the list in the system's own database, for the purpose of reducing the need to access the database of the telecommunications network when the values VSSI of the segment status indicator are calculated.

**Claims**

1.  A method for obtaining at least one value relating to the availability of a segment of a telecommunications network, which network includes a plurality of elements, each one of which, when it is in a non-operational status, generates an element non-operational status alarm A, the network comprising at least one database in which the alarms A generated by the elements of the network are stored, with an indication of a start time AST and an end time AET of each alarm, corresponding to the start and end, respectively, of a non-operational status period of the element that generated the alarm, and with an identification of said element, **characterized in that** the method comprises the steps of:

    - defining a segment S by selecting n elements of the elements forming part of the network, $n \geq 1$;
    - defining at least one segment status indicator SSI, defining its value VSSI in each moment as a function F of the value at the same moment of at least one alarm A corresponding to the selected elements;
    - defining an analysis period P;
    - dividing said period P into $m$ intervals I, $m \geq 1$;
    - obtaining a list of the alarms A corresponding to the selected elements and to the defined period P, said list including for each alarm A the start time AST and the end time AET of the alarm and an identification of the element that generated the alarm;
    - calculating, from the list of alarms and throughout each interval I, the value VSSI of the segment status indicator SSI as a function F of the alarms A corresponding to each moment, according to the list of alarms A;
    - obtaining a segment availability value SAV from the calculated value VSSI of the segment status indicator SSI.

2.  A method according to claim 1, **characterized in that** the intervals I of the period P all have the same duration DI.

3.  A method according to claim 2, **characterized in that** for at least one interval I, the segment availability value SAV during said interval is obtained by:

    dividing the interval into subintervals I' corresponding to each interval between a start time AST or an end time AET of an alarm generated by an element of the segment and the following start time AST or end time AET of an alarm generated by an element of the segment;
    calculating the value VSSI of the segment status indicator SSI for each subinterval I'; and
    calculating the segment availability value SAV for the interval I as the sum of the duration DI' of each subinterval multiplied by the value VSSI of the segment status indicator SSI for each subinterval I', divided by the duration DI of the interval I.

4.  A method according to claim 1, **characterized in that** the division of the period P into intervals I is done such that the separation between successive intervals corresponds to the moments of the start times AST and end times AET of the alarms of the list, such that the value VSSI of the segment status indicator SSI is constant throughout each interval I.

5.  A method according to any of the previous claims, **characterized in that** n = 1, whereby the segment comprises a single element, the value VSSI of the segment status indicator in each moment being a direct function of whether an alarm A corresponding to said element and to said moment exists in the list.

6.  A method according to any of claims 1-4, **characterized in that** $n \geq 2$, such that the segment comprises at least two elements, the value VSSI of the segment status indicator in each moment being a function of whether one or more alarms A corresponding to said elements and to said moment exists in the list.

7.  A method according to any of the previous claims, **characterized in that** the value VSSI of the segment status indicator in each moment can be defined as a weighted function F of the value in the same moment of alarms A corresponding to a plurality of elements of the segment, the weight being established according to an estimated relevance of an element for the availability of the segment.

8.  A method according to any of the previous claims, **characterized in that** $m \geq 2$.

9. A method according to any of the previous claims, **characterized in that** it is applied to a cellular mobile telephony network.

10. A system for obtaining at least one value relating to the availability of a segment of a telecommunications network, which network includes a plurality of elements, each one of which, when it is in a non-operational status, generates an element non-operational status alarm A, the network comprising at least one database in which the alarms A generated by the elements of the network are stored, with an indication of a start time AST and an end time AET of each alarm, corresponding to the start and end, respectively, of a non-operational status period of the element that generated the alarm, and with an identification of said element, **characterized in that** the system comprises:

- means for defining a segment S by selecting *n* elements of the elements forming part of the network, $n \geq 1$;
- means for defining at least one segment status indicator SSI, defining its value VSSI in each moment as a function F of the value in the same moment of at least one alarm A corresponding to the selected elements;
- means for defining a period P;
- means for dividing said period P into m intervals I, $m \geq 1$.
- means for obtaining a list of the alarms A) corresponding to the selected elements and to the defined period P, said list including for each alarm A the start time AST and the end time AET of the alarm and an identification of the element that generated the alarm;
- means for calculating, from the list of alarms and throughout each interval I, the value VSSI of the segment status indicator SSI as a function F of the alarms A corresponding to each moment, according to the list of alarms A;
- means for obtaining a segment availability value SAV from the calculated value VSSI of the segment status indicator SSI; and
- means for displaying said segment availability value in a subscriber interface.

11. A system according to claim 10, **characterized in that** it is configured such that the intervals I of the period P all have the same duration DI.

12. A system according to claim 11, **characterized in that** the means for calculating the value VSSI of the segment status indicator SSI and the means for obtaining a segment availability value SAV from the value VSSI are configured such that for at least one interval I, the segment availability value SAV during said interval is obtained by:

dividing the interval into subintervals I' corresponding to each interval between a start time AST or an end time AET of an alarm generated by an element of the segment and the following start time AST or end time AET of an alarm generated by an element of the segment;
calculating the value VSSI of the segment status indicator SSI for each subinterval I'; and
calculating the segment availability value SAV for the interval I as the sum of the duration DI' of each subinterval multiplied by the value VSSI of the segment status indicator SSI for said subinterval I', divided by the duration DI of the interval I.

13. A system according to claim 10, **characterized in that** it is configured such that the division of the period P into intervals I is done such that the separation between successive intervals corresponds to the moments of the start times AST and end times AET of the alarms of the list, such that the value VSSI of the segment status indicator SSI is constant throughout each interval I.

14. A system according to any of claims 10-13, **characterized in that** it is configured such that if $n = 1$, the segment comprises a single element and the value VSSI of the segment status indicator in each moment is a direct function of whether an alarm A corresponding to said element and to said moment exists in the list.

15. A system according to any of claims 10-13, **characterized in that** it is configured such that if $n \geq 2$, the segment comprises at least two elements, the value VSSI of the segment status indicator in each moment being a function of whether one or more alarms A corresponding to said elements and to said moment exists in the list.

16. A system according to any of claims 10-15, **characterized in that** the means for defining at least one segment status indicator SSI with a value VSSI are configured such that the value VSSI of the segment status indicator in each moment can be defined as a weighted function F of the value in the same moment of alarms A corresponding to a plurality of elements of the segment, so that an operator can establish the weight according to an estimated relevance of an element for the availability of the segment.

17. A system according to any of claims 10-16, **characterized in that** $m \geq 2$.

18. A system according to any of claims 10-17, **characterized in that** the telecommunications network is a cellular mobile telephony network.

19. A system according to any of the previous claims 10-18, **characterized in that** the means for obtaining a list of alarms A are configured to obtain said list from at least one database of the telecommunications network and to store the list in the system's own database for the purpose of reducing the need to access the database of the telecommunications network when the values VSSI of the segment status indicator are calculated.

20. A program product comprising program instruction means for carrying out the steps of a method defined in any of claims 1-9 when the program is run in a computer associated to a telecommunications network.

21. A program product according to claim 20, stored in a program medium.


**Patentansprüche**

1. Verfahren zum Ermitteln mindestens eines Wertes, der sich auf die Verfügbarkeit eines Segmentes eines Telekommunikationsnetzwerkes bezieht, wobei das Netzwerk mehrere Elemente enthält, von welchen jedes, wenn es sich in einem nicht betriebsbereiten Zustand befindet, einen "nicht betriebsbereiter Elementstatus"-Alarm A erzeugt, wobei das Netzwerk mindestens eine Datenbank umfasst, in der die Alarme A, die von den Elementen des Netzwerkes erzeugt werden, gespeichert sind, mit einer Anzeige einer Beginnzeit AST und einer Beendigungszeit AET jedes Alarmes entsprechend dem Beginn beziehungsweise der Beendigung einer Periode eines nicht betriebsbereiten Status des Elementes, das den Alarm erzeugt hat, und mit einer Identifizierung des Elementes, **dadurch gekennzeichnet, dass** das Verfahren folgende Schritte umfasst:

   - Definieren eines Segmentes S durch Auswählen von $n$ Elementen der Elemente, die Teil des Netzwerkes bilden, $n \geq 1$;
   - Definieren mindestens eines Segmentstatusindikators SSI, Definieren seines Wertes VSSI in jedem Moment als Funktion F des Wertes in demselben Moment von mindestens einem Alarm A entsprechend den gewählten Elementen;
   - Definieren einer Analyseperiode P;
   - Dividieren der Periode P in m Intervalle I, $m \geq 1$;
   - Erstellen einer Liste von Alarmen A entsprechend den gewählten Elementen und der definierten Periode P, wobei die Liste für jeden Alarm A die Beginnzeit AST und die Beendigungszeit AET des Alarmes und eine Identifizierung des Elementes enthält, das den Alarm erzeugt hat;
   - Berechnen aus der Liste von Alarmen und über jedes Intervall I des Wertes VSSI des Segmentstatusindikators SSI als Funktion F der Alarme A entsprechend jedem Moment, in Übereinstimmung mit der Liste von Alarmen A;
   - Ermitteln eines Segmentverfügbarkeitswertes SAV aus dem berechneten Wert VSSI des Segmentstatusindikators SSI.

2. Verfahren nach Anspruch 1, **dadurch gekennzeichnet, dass** die Intervalle I der Periode P alle dieselbe Dauer DI haben.

3. Verfahren nach Anspruch 2, **dadurch gekennzeichnet, dass** für mindestens ein Intervall I der Segmentverfügbarkeitswert SAV während des Intervalls ermittelt wird durch:

   Dividieren des Intervalls in Subintervalle I' entsprechend jedem Intervall zwischen einer Beginnzeit AST oder einer Beendigungszeit AET eines Alarmes, der von einem Element des Segmentes erzeugt wird, und der folgenden Beginnzeit AST oder Beendigungszeit AET eines Alarmes, der von einem Element des Segmentes erzeugt wird;
   Berechnen des Wertes VSSI des Segmentstatusindikators SSI für jedes Subintervall I'; und
   Berechnen des Segmentverfügbarkeitswertes SAV für das Intervall I als Summe der Dauer DI' jedes Subintervalls multipliziert mit dem Wert VSSI des Segmentstatusindikators SSI für jedes Subintervall I', dividiert durch die Dauer DI des Intervalls I.

**4.** Verfahren nach Anspruch 1, **dadurch gekennzeichnet, dass** die Division der Periode P in Intervalle I derart erfolgt, dass die Trennung zwischen aufeinander folgenden Intervallen den Momenten der Beginnzeiten AST und Beendigungszeiten AET der Alarme der Liste entspricht, so dass der Wert VSSI des Segmentstatusindikators SSI über jedes Intervall I konstant ist.

**5.** Verfahren nach einem der vorangehenden Ansprüche, **dadurch gekennzeichnet, dass** n = 1, wodurch das Segment ein einziges Element umfasst, wobei der Wert VSSI des Segmentstatusindikators in jedem Moment eine direkte Funktion abhängig davon ist, ob ein Alarm A, der dem Element und dem Moment entspricht, in der Liste vorhanden ist.

**6.** Verfahren nach einem der Ansprüche 1 bis 4, **dadurch gekennzeichnet, dass** $n \geq 2$, so dass das Segment mindestens zwei Elemente umfasst, der Wert VSSI des Segmentstatusindikators in jedem Moment eine Funktion abhängig davon ist, ob ein oder mehrere Alarme A, die den Elementen und dem Moment entsprechen, in der Liste vorhanden sind.

**7.** Verfahren nach einem der vorangehenden Ansprüche, **dadurch gekennzeichnet, dass** der Wert VSSI des Segmentstatusindikators in jedem Moment als eine gewichtete Funktion F des Wertes in demselben Moment von Alarmen A definiert werden kann, die mehreren Elementen des Segmentes entsprechen, wobei das Gewicht in Übereinstimmung mit einer geschätzten Relevanz eines Elementes für die Verfügbarkeit des Segmentes festgelegt ist.

**8.** Verfahren nach einem der vorangehenden Ansprüche, **dadurch gekennzeichnet, dass** $m \geq 2$.

**9.** Verfahren nach einem der vorangehenden Ansprüche, **dadurch gekennzeichnet, dass** es bei einem mobilen Zellulartelefonnetzwerk angewendet wird.

**10.** System zum Ermitteln mindestens eines Wertes, der sich auf die Verfügbarkeit eines Segmentes eines Telekommunikationsnetzwerkes bezieht, wobei das Netzwerk mehrere Elemente enthält, von welchen jedes, wenn es sich in einem nicht betriebsbereiten Zustand befindet, einen "nicht betriebsbereiter Elementstatus"-Alarm A erzeugt, wobei das Netzwerk mindestens eine Datenbank umfasst, in der die Alarme A, die von den Elementen des Netzwerkes erzeugt werden, gespeichert sind, mit einer Anzeige einer Beginnzeit AST und einer Beendigungszeit AET jedes Alarmes entsprechend dem Beginn beziehungsweise der Beendigung einer Periode eines nicht betriebsbereiten Status des Elementes, das den Alarm erzeugt hat, und mit einer Identifizierung des Elementes, **dadurch gekennzeichnet, dass** das System Folgendes umfasst:

- Mittel zum Definieren eines Segmentes S durch Auswählen von n Elementen der Elemente, die Teil des Netzwerkes bilden, $n \geq 1$;
- Mittel zum Definieren mindestens eines Segmentstatusindikators SSI, Definieren seines Wertes VSSI in jedem Moment als Funktion F des Wertes in demselben Moment von mindestens einem Alarm A entsprechend den gewählten Elementen;
- Mittel zum Definieren einer.Periode P;
- Mittel zum Dividieren der Periode P in m Intervalle I, $m \geq 1$;
- Mittel zum Erstellen einer Liste von Alarmen A entsprechend den gewählten Elementen und der definierten Periode P, wobei die Liste für jeden Alarm A die Beginnzeit AST und die Beendigungszeit AET des Alarmes und eine Identifizierung des Elementes enthält, das den Alarm erzeugt hat;
- Mittel zum Berechnen aus der Liste von Alarmen und über jedes Intervall I des Wertes VSSI des Segmentstatusindikators SSI als Funktion F der Alarme A entsprechend jedem Moment, in Übereinstimung mit der Liste von Alarmen A;
- Mittel zum Ermitteln eines Segmentverfügbarkeitswertes SAV aus dem berechneten Wert VSSI des Segmentstatusindikators SSI; und
- Mittel zum Anzeigen des Segmentverfügbarkeitswertes in einer Teilnehmerschnittstelle.

**11.** System nach Anspruch 10, **dadurch gekennzeichnet, dass** es derart konfiguriert ist, dass die Intervalle I der Periode P alle dieselbe Dauer DI haben.

**12.** System nach Anspruch 11, **dadurch gekennzeichnet, dass** das Mittel zum Berechnen des Wertes VSSI des Segmentstatusindikators SSI und das Mittel zum Ermitteln eines Segmentverfügbarkeitswert SAV aus dem Wert VSSI derart konfiguriert sind, dass für mindestens ein Intervall I der Segmentverfügbarkeitswert SAV während des Intervalls ermittelt wird durch:

Dividieren des Intervalls in Subintervalle I' entsprechend jedem Intervall zwischen einer Beginnzeit AST oder einer Beendigungszeit AET eines Alarmes, der von einem Element des Segmentes erzeugt wurde, und der folgenden Beginnzeit AST oder Beendigungszeit AET eines Alarmes, der von einem Element des Segmentes erzeugt wurde;

Berechnen des Wertes VSSI des Segmentstatusindikators SSI für jedes Subintervall I'; und

Berechnen des Segmentverfügbarkeitswertes SAV für das Intervall I als Summe der Dauer DI' jedes Subintervalls multipliziert mit dem Wert VSSI des Segmentstatusindikators SSI für jedes Subintervall I', dividiert durch die Dauer DI des Intervalls I.

13. System nach Anspruch 10, **dadurch gekennzeichnet, dass** es derart konfiguriert ist, dass die Division der Periode P in Intervalle I derart erfolgt, dass die Trennung zwischen aufeinander folgenden Intervallen den Momenten der Beginnzeiten AST und Beendigungszeiten AET der Alarme der Liste entspricht, so dass der Wert VSSI des Segmentstatusindikators SSI über jedes Intervall I konstant ist.

14. System nach einem der Ansprüche 10 bis 13, **dadurch gekennzeichnet, dass** es derart konfiguriert ist, dass, wenn $n = 1$, das Segment ein einziges Element umfasst und der Wert VSSI des Segmentstatusindikators in jedem Moment eine direkte Funktion abhängig davon ist, ob ein Alarm A, der dem Element und dem Moment entspricht, in der Liste vorhanden ist.

15. System nach einem der Ansprüche 10 bis 13, **dadurch gekennzeichnet, dass** es derart konfiguriert ist, dass, wenn $n \geq 2$, das Segment mindestens zwei Elemente umfasst, wobei der Wert VSSI des Segmentstatusindikators in jedem Moment eine Funktion abhängig davon ist, ob ein oder mehrere Alarme A, die den Elementen und dem Moment entsprechen, in der Liste vorhanden sind.

16. System nach einem der Ansprüche 10 bis 15, **dadurch gekennzeichnet, dass** die Mittel zum Definieren mindestens eines Segmentstatusindikators SSI mit einem Wert VSSI derart konfiguriert sind, dass der Wert VSSI des Segmentstatusindikators in jedem Moment als eine gewichtete Funktion F des Wertes in demselben Moment von Alarmen A definiert werden kann, die mehreren Elementen des Segmentes entsprechen, so dass ein Bediener das Gewicht in Übereinstimmung mit einer geschätzten Relevanz eines Elementes für die Verfügbarkeit des Segmentes festlegen kann.

17. System nach einem der Ansprüche 10 bis 16, **dadurch gekennzeichnet, dass** $m \geq 2$.

18. System nach einem der Ansprüche 10 bis 17, **dadurch gekennzeichnet, dass** das Telekommunikationsnetzwerk ein mobiles Zellulartelefonnetzwerk ist.

19. System nach einem der Ansprüche 10 bis 18, **dadurch gekennzeichnet, dass** das Mittel zum Erstellen einer Liste von Alarmen A so konfiguriert ist, dass die Liste aus mindestens einer Datenbank des Telekommunikationsnetzwerkes erstellt wird und die Liste in der systemeigenen Datenbank gespeichert wird, für den Zweck einer Herabsetzung der Notwendigkeit, auf die Datenbank des Telekommunikationsnetzwerkes zugreifen zu müssen, wenn die Werte (VSSI) des Segmentstatusindikators berechnet werden.

20. Programmprodukt, umfassend Programmanweisungsmittel zur Durchführung der Schritte eines Verfahrens, das in einem der Ansprüche 1 bis 9 definiert ist, wenn das Programm in einem Computer läuft, der mit einem Telekommunikationsnetzwerk verbunden ist.

21. Programmprodukt nach Anspruch 20, das in einem Programmmedium gespeichert ist.

**Revendications**

1. Procédé d'obtention d'au moins une valeur liée à la disponibilité d'un segment d'un réseau de télécommunications, ledit réseau comprenant une pluralité d'éléments, dont chacun, lorsqu'il se trouve dans un statut non opérationnel, génère une alarme de statut non opérationnel d'élément A, le réseau comprenant au moins une base de données dans laquelle les alarmes A générées par les éléments du réseau sont stockées, avec une indication d'un moment de début AST et d'un moment de fin AET de chaque alarme, correspondant au début et à la fin, respectivement, d'une période de statut non opérationnel de l'élément qui a généré l'alarme, et avec une identification dudit élément, **caractérisé en ce que** le procédé comprend les étapes consistant à :

- définir un segment S en sélectionnant n éléments parmi les éléments faisant partie du réseau, $n \geq 1$ ;
- définir au moins un indicateur de statut de segment SSI, définissant sa valeur VSSI à chaque moment comme une fonction F de la valeur au même moment d'au moins une alarme A correspondant aux éléments sélectionnés ;
- définir une période d'analyse P ;
- diviser ladite période P en m intervalles I, $m \geq 1$ ;
- obtenir une liste des alarmes A correspondant aux éléments sélectionnés et à la période définie P, ladite liste comprenant, pour chaque alarme A, le moment de début AST et le moment de fin AET de l'alarme et une identification de l'élément qui a généré l'alarme ;
- calculer, à partir de la liste d'alarmes et au sein de chaque intervalle I, la valeur VSSI de l'indicateur de statut de segment SSI comme une fonction F des alarmes A correspondant à chaque moment, selon la liste d'alarmes A ;
- obtenir une valeur de disponibilité de segment SAV à partir de la valeur calculée VSSI de l'indicateur de statut de segment SSI.

2. Procédé selon la revendication 1, **caractérisé en ce que** les intervalles I de la période P possèdent tous la même durée DI.

3. Procédé selon la revendication 2, **caractérisé en ce que**, pour au moins un intervalle I, la valeur de disponibilité de segment SAV pendant ledit intervalle est obtenue en :

divisant l'intervalle en sous-intervalles I' correspondant à chaque intervalle entre un moment de début AST ou un moment de fin AET d'une alarme générée par un élément du segment et le moment de début AST ou le moment de fin AET suivant d'une alarme générée par un élément du segment ;
calculant la valeur VSSI de l'indicateur de statut de segment SSI pour chaque sous-intervalle I' ; et
en calculant la valeur de disponibilité de segment SAV pour l'intervalle I comme une somme de la durée DI' de chaque sous-intervalle multipliée par la valeur VSSI de l'indicateur de statut de segment SSI pour chaque sous-intervalle I', divisée par la durée DI de l'intervalle I.

4. Procédé selon la revendication 1, **caractérisé en ce que** la.division de la période P en intervalles I est effectuée afin que la séparation entre des intervalles successifs corresponde aux moments des moments de début AST et des moments de fin AET des alarmes de la liste, afin que la valeur VSSI de l'indicateur de statut de segment SSI soit constante au sein de chaque intervalle I.

5. Procédé selon l'une quelconque des revendications précédentes, **caractérisé en ce que** n = 1, moyennant quoi le segment comprend un seul élément, la valeur VSSI de l'indicateur de statut de segment à chaque moment étant une fonction directe du fait qu'une alarme A correspondant audit élément et audit moment existe dans la liste.

6. Procédé selon l'une quelconque des revendications 1 à 4, **caractérisé en ce que** $n \geq 2$, afin que le segment comprenne au moins deux éléments, la valeur VSSI de l'indicateur de statut de segment à chaque moment étant une fonction du fait qu'une ou plusieurs alarme(s) A correspondant auxdits éléments et auxdits moments existe(nt) dans la liste.

7. Procédé selon l'une quelconque des revendications précédentes, **caractérisé en ce que** la valeur VSSI de l'indicateur de statut de segment à chaque moment peut être définie comme une fonction pondérée F de la valeur au même moment des alarmes A correspondant à une pluralité d'éléments du segment, la pondération étant établie selon une pertinence estimée d'un élément pour la disponibilité du segment.

8. Procédé selon l'une quelconque des revendications précédentes, **caractérisé en ce que** $m \geq 2$.

9. Procédé selon l'une quelconque des revendications précédentes, **caractérisé en ce qu'**il est appliqué à un réseau de téléphonie mobile cellulaire.

10. Système d'obtention d'au moins une valeur liée à la disponibilité d'un segment d'un réseau de télécommunications, ledit réseau comprenant une pluralité d'éléments; dont chacun, lorsqu'il se trouve dans un statut non opérationnel, génère une alarme de statut non opérationnel d'élément A, le réseau comprenant au moins une base de données dans laquelle les alarmes A générées par les éléments du réseau sont stockées, avec une indication d'un moment de début AST et d'un moment de fin AET de chaque alarme, correspondant au début et à la fin, respectivement, d'une période de statut non opérationnel de l'élément qui a généré l'alarme, et avec une identification dudit élément, **caractérisé en ce que** le système comprend :

- un moyen de définition d'un segment S en sélectionnant n éléments parmi les éléments faisant partie du réseau, n $\geq$ 1 ;
- un moyen de définition d'au moins un indicateur de statut de segment SSI, définissant sa valeur VSSI à chaque moment comme une fonction F de la valeur au même moment d'au moins une alarme A correspondant aux éléments sélectionnés ;
- un moyen de définition d'une période d'analyse P ;
- un moyen de division de ladite période P en m intervalles I, m $\geq$ 1 ;
- un moyen d'obtention d'une liste des alarmes A) correspondant aux éléments sélectionnés et à la période définie P, ladite liste comprenant, pour chaque alarme A, le moment de début AST et le moment de fin AET de l'alarme et une identification de l'élément qui a généré l'alarme ;
- un moyen de calcul, à partir de la liste d'alarmes et au sein de chaque intervalle I, de la valeur VSSI de l'indicateur de statut de segment SSI comme une fonction F des alarmes A correspondant à chaque moment, selon la liste d'alarmes A ;
- un moyen d'obtention d'une valeur de disponibilité de segment SAV à partir de la valeur calculée VSSI de l'indicateur de statut de segment SSI ; et
- un moyen d'affichage de ladite valeur de disponibilité de segment sur une interface d'abonné.

**11.** Système selon la revendication 10, **caractérisé en ce qu'**il est configuré afin que les intervalles I de la période P possèdent tous la même durée DI.

**12.** Système selon la revendication 11, **caractérisé en ce que** le moyen de calcul de la valeur VSSI de l'indicateur de statut de segment SSI et le moyen d'obtention d'une valeur de disponibilité de segment SAV à partir de la valeur VSSI sont configurés afin que, pour au moins un intervalle I, la valeur de disponibilité de segment SAV pendant ledit intervalle soit obtenue en :

divisant l'intervalle en sous-intervalles I' correspondant à chaque intervalle entre un moment de début AST ou un moment de fin AET d'une alarme générée par un élément du segment et le moment de début AST ou le moment de fin AET suivant d'une alarme générée par un élément du segment ;
calculant la valeur VSSI de l'indicateur de statut de segment SSI pour chaque sous-intervalle I' ; et
en calculant la valeur de disponibilité de segment SAV pour l'intervalle I comme la somme de la durée DI' de chaque sous-intervalle multipliée par la valeur VSSI de l'indicateur de statut de segment SSI pour ledit sous-intervalle I', divisée par la durée DI de l'intervalle I.

**13.** Système selon la revendication 10, **caractérisé en ce qu'**il est configuré afin que la division de la période P en intervalles I soit effectuée afin que la séparation entre des intervalles successifs corresponde aux moments des moments de début AST et des moments de fin AET des alarmes de la liste, afin que la valeur VSSI de l'indicateur de statut de segment SSI soit constante au sein de chaque intervalle I.

**14.** Système selon l'une quelconque des revendications 10 à 13, **caractérisé en ce qu'**il est configuré afin que, si n = 1, le segment comprenne un seul élément et la valeur VSSI de l'indicateur de statut de segment à chaque moment soit une fonction directe du fait qu'une alarme A correspondant audit élément et audit moment existe dans la liste.

**15.** Système selon l'une quelconque des revendications 10 à 13, **caractérisé en ce qu'**il est configuré afin que, si n $\geq$ 2, le segment comprenne au moins deux éléments, la valeur VSSI de l'indicateur de statut de segment à chaque moment étant une fonction du fait qu'une ou plusieurs alarme(s) A'correspondant auxdits éléments et auxdits moments existe(nt) dans la liste.

**16.** Système selon l'une quelconque des revendications 10 à 15, **caractérisé en ce que** le moyen de définition d'au moins un indicateur de statut de segment SSI avec une valeur VSSI est configuré afin que la valeur VSSI de l'indicateur de statut de segment à chaque moment puisse être définie comme une fonction pondérée F de la valeur au même moment des alarmes A correspondant à une pluralité d'éléments du segment, afin qu'un opérateur puisse établir la pondération selon une pertinence estimée d'un élément pour la disponibilité du segment.

**17.** Système selon l'une quelconque des revendications 10 à 16, **caractérisé en ce que** m ≥ 2.

**18.** Système selon l'une quelconque des revendications 10 à 17, **caractérisé en ce que** me réseau de télécommunications est un réseau de téléphonie mobile cellulaire.

**19.** Système selon l'une quelconque des revendications précédentes 10 à 18, **caractérisé en ce que** le moyen d'obtention d'une liste d'alarmes A est configuré afin d'obtenir ladite liste à partir d'au moins une base de données du réseau de télécommunications et de stocker la liste dans la propre base de données du système afin de réduire la nécessité d'accéder à la base de données du réseau de télécommunications lorsque les valeurs (VSSI) de l'indicateur de statut de segment sont calculées.

**20.** Produit de programme comprenant un moyen d'instructions de programme destiné à exécuter les étapes d'un procédé défini dans l'une quelconque des revendications 1 à 9 lorsque le programme est exécuté sur un ordinateur associé à un réseau de télécommunications.

**21.** Produit de programme selon la revendication 20, stocké sur un support de programme.

**EP 1 646 255 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6003090 A

- US 5930333 A